Europäisches Patentamt

(19) European Patent Office

Office européen des brevets

(11) Publication number: **0 104 816**
**B1**

(12) # EUROPEAN PATENT SPECIFICATION

(45) Date of publication of patent specification: **11.05.88**

(51) Int. Cl.⁴: **B 65 D 69/00**

(21) Application number: **83305217.8**

(22) Date of filing: **07.09.83**

(54) **A process for dispensing individual planar, rigid thermoplastic articles.**

(30) Priority: **23.09.82 US 421859**

(43) Date of publication of application:
**04.04.84 Bulletin 84/14**

(45) Publication of the grant of the patent:
**11.05.88 Bulletin 88/19**

(84) Designated Contracting States:
**DE FR GB IT**

(56) References cited:
**DE-A-2 043 344**
**US-A-2 939 147**
**US-A-3 021 947**
**US-A-4 305 503**

(73) Proprietor: **Roberts, John Thomas**
**Rt. 5, Box 198B**
**Clover South Carolina 29710 (US)**

(72) Inventor: **Roberts, John Thomas**
**Rt. 5, Box 198B**
**Clover South Carolina 29710 (US)**

(74) Representative: **Allen, William Guy Fairfax et al**
**J.A. KEMP & CO. 14 South Square Gray's Inn**
**London WC1R 5EU (GB)**

Courier Press, Leamington Spa, England.

## Description

This invention relates generally to the art of dispensing articles.

Dispensing of articles in automatic fashion has been of significant interest in the transition from manual processing to machine processing of various items. Dispensing techniques have been particularly well-developed in the area of packaging. Examples of such technology include the automatic dispensing of plastic bags, one at a time, by having such bags arranged in a shingled relationship along a taped carrier. Additionally, such bags have been shingled to one another utilizing heat seals between individual bags. The overall object of such an arrangement is to facilitate the dispensing of such bags utilizing automated equipment.

Associated with such technology in the packaging art are various items of rigid plastic material which must be dispensed one at a time in order to have some association with a bag or a packaged article.

One such device is described in U.S. Patent No. 3,270,874 where individual plastic bag closures such as the type normally used on bread packages are arranged together in a unitary, side-by-side relationship with scores between individual hooks to facilitate the severance of individual articles from the unitary strip. Such hooks are severed by merely bending the strip at the point of score. This product is arranged primarily for manual dispensing.

A dispensing mechanism is described in U.S. Patent No. 2,939,147 wherein curtain hooks are arranged for automatic dispensing, one at a time, such that the hooks are stacked together and connected together by a spline which maintains the hooks in the stacked relationship, and facilitates loading into a magazine where they are dispensed one at a time from the stack, after the spline has been removed, the hooks being automatically inserted directly into the headbands of the curtains.

Another dispensing device is described in U.S. Patent No. 3,165,968 wherein a plastic nailing strip is utilized to connect together individual nail articles for the purposes of dispensing the articles one at a time with automated equipment. A similar device is described in U.S. Patent No. 3,357,761.

DE—A—2043344 described a cartridge of thermoplastic toothpicks which are arranged in stacked relationship and connected together by a fusion bond to form a cartridge, from which the individual toothpicks may be dispensed. The toothpicks are apparently dispensed by the user manually bending the individual toothpicks up from their plane and the bond is then broken.

There is also known in the art an office stapler in which a cartridge of staples is held together by lacquer or the like. The individual staples are removed by the operating blade of the stapler moving transverse to the length of the cartridge and shearing the end staple off.

In facilitating the marketing of retail items, it has been known in the prior art to utilize rigid thermoplastic hooks or hanger attachments to individual hooks for displaying such items in a retail environment. In the past such hooks have been dispensed from a loose cartridge for stapling or other means of attachment to a marketable item. Such individual hooks have been arranged with magazines manually in loose stacks. Such arrangement has required great skill on the part of the operator in order to ensure loading of large numbers of such hooks in a stacked relationship. Essentially, such loading requires movement of large numbers of hooks within a stack by utilizing only hand pressure at both ends to maintain the stack in alignment, while hoping that the central area of the stack did not collapse to produce a disoriented array of hooks which must be again manually restacked for purposes of loading into a dispensing magazine.

According to the present invention there is provided a process for dispensing individual planar, rigid thermoplastic articles, said process comprising arranging said articles in stacked relationship, said articles having a generally planar interface between stacked articles, with the articles being positioned in full register with one another, connecting said articles together by applying a heated element to an edge portion of the thermoplastic material of each article at a temperature substantially equal to or slightly higher than the softening point of the thermoplastic material to provide a fusion bond, between the articles to form a unitary self-supporting cartridge, from which the articles may be dispensed, arranging the cartridge in a dispensing mechanism, with the connecting fusion bond arranged substantially vertically, with one end article of the cartridge forming the bottom of the cartridge and moving a dispensing blade to abut and displace the said bottom article from the cartridge in a plane substantially parallel to said planar interface, thereby to break the fusion bond of said bottom article and move this article away from the cartridge.

The cartridge is essentially unified and fixed so as to facilitate movement and the loading thereof without any disarray created in the relationship by the operator. Additionally, the individual articles can be readily sheared from the cartridge without leaving behind extraneous matter to foul the dispensing mechanism or work area.

In order that the invention may more readily be understood, the following description is given, merely by way of example, reference being made to the accompanying drawings, in which:—

Figure 1 illustrates one embodiment of articles, i.e. hooks suitable for use in a cartridge which can be dispensed in accordance with this invention;

Figure 2 is a perspective view of one embodiment of the cartridge, made up from several hooks as illustrated in Figure 1;

Figures 3 and 4 are schematic sectional side elevations illustrating a dispensing mechanism for dispensing individual hooks from the cartridge illustrated in Figure 2;

Figure 5 is a view, similar to Figure 1, of a modified form of individual hooks; and

Figure 6 is a view, similar to Figure 2, of a cartridge, formed in a preferred way, of a stack of hooks according to Figure 5.

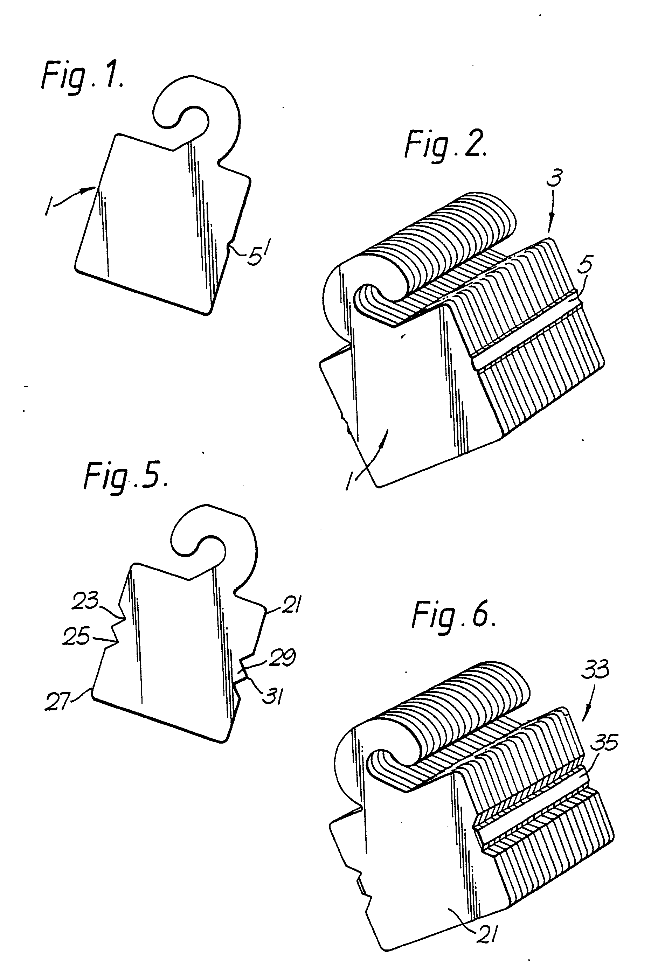

Figure 1 of the drawings illustrates an individual thermoplastic hook 1, which in this instance is for use in the display and marketing of retail items. For example, the hooks can be secured, e.g. by stapling, to gloves, or other articles of clothing.

Figure 2 of the drawings illustrates the individual thermoplastic hook 1, arranged into a cartridge 3, for ultimate utilization within a magazine of a dispensing mechanism. It can be seen that the cartridge 3 is formed by a fusion bond 5 along the edges of individual thermoplastic hooks 1. The cartridge is formed by a stacked relationship of the individual thermoplastic hooks 1, such that individual thermoplastic hooks 1 may be sheared from the cartridge in seriatim fashion.

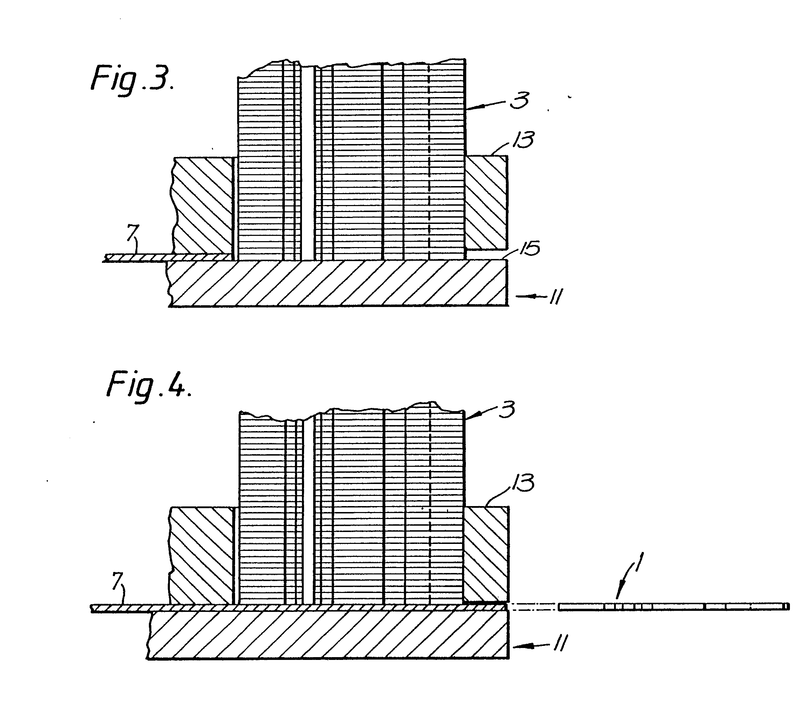

Figure 3 of the drawings illustrates a dispensing mechanism 11, which comprises means for defining a magazine 13, a surface 15 upon which cartridge 3 rests, and a shear blade 7 for shearing individual thermoplastic hooks 1 from cartridge 3.

Figure 4 illustrates the mechanism of Figure 3 with shear blade 7 having severed an individual hook 1 from cartridge 3. It is thus seen that the cartridge 3 may be readily loaded into the magazine 13 without great skill required on the part of the operator to maintain the essentially card pack array of individual thermoplastic hooks, since the fusion bond 5 maintains the array without adding extraneous matter to the cartridge and thus eliminating the need for somehow disposing of such extraneous matter once dispensing has occurred.

The dispensing cartridge may be formed from individual hooks of essentially any thermoplastic materials which are capable of being fusion-bonded together. The more prominently useful thermoplastic materials currently utilized for commercial applications include the polyolefins and copolymers of olefins with polyethylene, polypropylene and copolymers of ethylene and propylene with ethylene vinyl acetate being extensively utilized material because of the low cost thereof. Cartridges of the type illustrated in Figure 2 of the drawings may be formed utilizing literally hundreds of individual thermoplastic hooks which is significantly more than any skilled operator could manually handle in one loading operation. The increased operator efficiency brought about by utilization of this invention is surprising and unexpected.

The heat seal 5 illustrated in Figure 2 of the drawings is formed by merely contacting a stack of individual hooks with an object which is heated to substantially the softening point of the thermoplastic material or slightly higher so as to effect the fusion bond. Figure 1 of the drawings illustrates a relic 5' of the fusion bond after the individual thermoplastic hook 1 has been dispensed from the cartridge. Preferably, the fusion bond 5 is effected by the placement of a heated, teflon-coated, metallic rod along the length of the stack of individual hooks 1. The fusion bond, however, may be brought about by means other than a heated rod, such as ultrasonic welding.

A particularly preferred embodiment of cartridge is illustrated in Figures 5 and 6 wherein an individual thermoplastic hook 21 is formed having notches 23 and 25 in the edge 27 thereof. It is seen that notches 23 and 25 define a generally triangular cross-section tongue 29 having an apex 31 thereon. A heat seal may thus be effected along the lines of apices 31 thereof which results in the flattening of the triangular tongue 29 of each hook into notches 23 and 25. The strength of the bond may thus be determined by the degree of flattening of tongue 29. Figure 6 illustrates the appearance of the thus formed cartridge 33 after a heat seal 35 has been effected by attaching the individual triangular tongues of adjacent thermoplastic hooks 21. Great control over the strength of the bond is thus brought about by this arrangement while permitting the heat seal to be effected without affecting the extra perimeter area of the cartridge 33.

Preferably, the individual articles, in the instance hooks, are formed by stamping the individual thermoplastic articles from a sheet of rigid thermoplastic material. The stamped item is loaded into a magazine which is adjacent the cutting die such that no disorientation occurs between individual hooks during the forming process. The heat seal is thus effected while the individual hooks are still within a magazine associated with the cutting dies. Complete cartridges may be thus unloaded from the magazine associated with the forming process, and shipped to remote locations for utilization on automated equipment. It is understood, however, that the individual articles may be formed by other processes, such as injection moulding.

It is thus apparent that the process disclosed herein uses a cartridge of individual thermoplastic articles attached together without extraneous material thus to facilitate the loading of dispensing magazines without requiring extensive operator skill, and permitting the loading of a significantly greater number of individual articles than could heretofore be carried out by human operators.

**Claim**

A process for dispensing individual planar, rigid thermoplastic articles (1, 21), said process comprising arranging said articles in stacked relationship, said articles having a generally planar interface between stacked articles, with the articles being positioned in full register with one another, connecting said articles together by applying a heated element to an edge portion of the thermoplastic material of each article at a temperature substantially equal to or slightly higher than the softening point of the thermoplastic material to provide a fusion bond (5, 35), between the articles to form a unitary self-supporting cartridge (3, 33), from which the articles may be dispensed, arranging the cartridge in a dispensing mechanism (11), with the connecting fusion bond (5, 35) arranged substantially vertically, with one end article of the cartridge forming the bottom of the cartridge and moving a dispensing blade (7) to abut and displace the said bottom article from the cartridge in a plane substantially parallel to said planar interface, thereby to break the fusion bond of said bottom article and move this article away from the cartridge.

**Patentanspruch**

Verfahren zum Austeilen einzelner ebener, steifer Gegenstände (1, 21) aus thermoplastischem Material mit folgenden Verfahrenschritten:

— Anordnen der Gegenstände in einem Stapel aufeinander, wobei die gestapelten Gegenstände eine im allgemeinen ebene Berührungsfläche zwischen sich aufweisen und in vollständiger gegenseitiger Überdeckung positioniert sind,

— Verbinden der Gegenstände untereinander durch Einwirken eines Heizelements auf die Kantenabschnitte des thermoplastischen Materials jeden Gegenstandes bei einer Temperatur, die im wesentlichen gleich oder nur etwas höher ist als der Erweichungspunkt des thermoplastischen Materials, um eine Schmelzverbindung (5, 35) zwischen den Gegenständen zu schaffen, um einen einheitlichen selbsttragenden Einsatz (30, 33) zu bilden, von dem aus die Gegenstände verteilt werden können.

— Anordnen des Einsatzes in einem Austeilmechanismus (11), wobei die verbindende Schmelzverbindung (5, 35) in wesentlichen vertikal angeordnet ist und ein endseitiger Gegenstand des Einsatzes den Boden des Einsatzes bildet und

— Bewegen eines Austeilschiebers (7), um an den bodenseitigen Gegenstand anzustoßen und diesen in einer Ebene vom Einsatz zu schieben, die im wesentlichen parallel zu den ebenen Berührungsflächen angeordnet ist, wobei die Schmelzverbindung des bodenseitigen Gegenstands aufgebrochen und dieser vom Einsatz wegbewegt wird.

**Revendication**

Procédé de distribution d'articles individuels, plats et rigides, en matière thermoplastique (1, 21), ce procédé consistent à arranger ces articles suivant une disposition relative empilée. ces articles offrant un interface sensiblement plan entre articles empilés, les articles étant disposés en coïncidence totale entre eux, à joindre lesdits articles entre eux en appliquant un élément chauffé sur une partie marginale de la matière thermoplastique de chaque article à une température sensiblement égale ou légèrement supérieure au point de ramollissement de la matière thermoplastique afin de fournir une liaison par fusion (5, 35) entre les articles, de façon à former une recharge autoporteuse unitaire (3, 33) à partir de laquelle les articles peuvent être distribués, à disposer cette recharge dans un mécanisme distributeur (11) avec la liaison par fusion (5, 35) assurant la jonction disposée de manière sensiblement verticale, un article extrême de la recharge formant le fond de cette cartouche, et à déplacer une lame distributrice (7) de façon qu'elle vienne en butée sur l'article inférieur et le déplace par rapport à la recharge, dans un plan sensiblement parallèle audit interface plan, de façon à ainsi rompre la liaison par fusion de cet article inférieur et déplacer cet article en le séparant de la recharge.

Fig.1.

Fig.2.

Fig.5.

Fig.6.

Fig.3.

Fig.4.